# EUROPEAN PATENT APPLICATION

(11) **EP 2 309 277 A1**
(43) Date of publication of application: **13.04.2011**
(21) Application number: 10181978.7
(22) Date of filing: 29.09.2010
(51) Int. Cl.: G01N 35/00

(54) **Analysis apparatus and an information displaying method**

(30) Priority: 30.09.2009 JP 2009226317
(71) Applicant: SYSMEX CORPORATION, Kobe-shi, Hyogo 651-0073 (JP)
(72) Inventor: Fukuma, Daigo, Hyogo 651-0073 (JP); Takehara, Hisato, Hyogo 651-0073 (JP)
(74) Representative: HOFFMANN EITLE

(57) **Abstract**

An analysis apparatus which has a first and second measuring units for measuring a clinical sample; and an information processing unit which is connected to the first and second measuring units so as to perform information communication with the first and second measuring units, wherein the first measuring unit is provided with a first marker, the second measuring unit is provided with a second marker, and the information processing unit has an information display section; and a display controller for displaying the first marker in association with the information relating to the first measuring unit on the information display section, and for displaying the second marker in association with the information relating to the second measuring unit on the information display section. Also, an information displaying method.

## Description

### FIELD OF THE INVENTION

The present invention relates to an analysis apparatus for analyzing a clinical sample such as urine or blood and an information displaying method.

### BACKGROUND

In Japanese Laid-Open Patent Publication No. 2009-58532, as an automatic analysis apparatus for analyzing blood, urine or the like, an automatic analysis apparatus is described which operates a plurality of analysis units by a single apparatus operating section. This automatic analysis apparatus is configured such that the apparatus operating section issues an analysis request to each of the analysis units.

The automatic analysis apparatus described in Japanese Laid-Open Patent Publication No. 2009-58532 has a problem in that it is difficult to know at a glance which one of the plurality of analysis units is associated with the information displayed on the apparatus operating section.

### SUMMARY OF THE INVENTION

The scope of the present invention is defined solely by the appended claims, and is not affected to any degree by the statements within this summary.

(1) A first aspect of the present invention is an analysis apparatus comprising: a first measuring unit for measuring a clinical sample; a second measuring unit for measuring a clinical sample; and an information processing unit which is connected to the first and second measuring units so as to perform information communication with the first and second measuring units, wherein at least a part of the first measuring unit has a first color, at least a part of the second measuring unit has a second color which is different from the first color, and the information processing unit comprises:
   an information display section for displaying a first screen including information relating to the first measuring unit and
   a second screen including information relating to the second measuring unit; and a display controller for displaying at least a part of the first screen with the first color when displaying the first screen on the information display section,
   and for displaying at least a part of the second screen with the second color when displaying the second screen on the information display section.

(2) The analysis apparatus according to (1), wherein the first measuring unit further comprises: a first marker display section for displaying the first marker; and a first controller for displaying the first marker on the first marker display section, and the second measuring unit further comprises: a second marker display section for displaying the second marker; and a second controller for displaying the second marker on the second marker display section.

(3) The analysis apparatus according to (2), wherein the information processing unit further comprises a setting section for setting the first and second markers, the first controller displays the first marker which is set by the setting section on the first marker display section, and the second controller displays the second marker which is set by the setting section on the second marker display section.

(4) The analysis apparatus according to any one of (1) to (3), wherein the information processing unit further comprises a setting section for setting the first and second markers, and the display controller displays the first marker which is set by the setting section in association with the information relating to the first measuring unit on the information display section, and displays the second marker which is set by the setting section in association with the information relating to the second measuring unit on the information display section.

(5) The analysis apparatus according to any one of (1) to (4), wherein the first marker is a first color, and the second marker is a second color different from the first color.

(6) The analysis apparatus according to any one of (1) to (5), wherein the information display section is configured to display a first display screen for displaying the information relating to the first measuring unit and a second display screen for displaying the information relating to the second measuring unit, and the display controller displays the first marker together with the first display screen on the information display section when displaying the first display screen on the information display section, and displays the second marker together with the second display screen on the information display section when displaying the second display screen on the information display section.

(7) The analysis apparatus according to (6), wherein the first marker is a first color, the second marker is a second color different from the first color, and the display controller displays a part of the first display screen with the first color when displaying the first display screen, and displays a part of the second display screen with the second color when displaying the second display screen.

(8) The analysis apparatus according to (6) or (7), wherein the first display screen has a first display area for displaying the first marker and a second display area which is a larger area than the first display area, and the second display screen has a third display area for displaying the second marker and a fourth display area which is a larger area than the third display area.

(9) The analysis apparatus according to (8), wherein the first and third display areas are title bars or tool bars.

(10) The analysis apparatus according to any one of (6) to (9), wherein the display controller is configured to display the first display screen and the second display screen on the information display section at a time.

(11) The analysis apparatus according to any one of (6) to (10), wherein the first display screen is selected from a first menu screen for selecting an operation to be performed on the first measuring unit, a first error screen for displaying an error which occurred in the first measuring unit, a first measurement item registration screen for registering a measurement item to be measured by the first measuring unit and a first analysis result screen for displaying an analysis result based on measurement data obtained by the first measuring unit, and the second display screen is selected from a second menu screen for selecting an operation to be performed on the second measuring unit, a second error screen for displaying an error which occurred in the second measuring unit, a second measurement item registration screen for registering a measurement item to be measured by the second measuring unit and a second analysis result screen for displaying an analysis result based on measurement data obtained by the second measuring unit.

(12) The analysis apparatus according to any one of (1) to (11), further comprising: a third measuring unit for measuring a clinical sample, wherein the information processing unit is connected to the third measuring unit so as to perform information communication with the first and second measuring units, the third measuring unit has a third marker which is different from the first and second markers and by which the third measuring unit can be visually recognized, the information display section is configured to display information relating to the third measuring unit, and the display controller displays the third marker in association with the information relating to the third measuring unit on the information display section when displaying the information relating to the third measuring unit on the information display section.

(13) The analysis apparatus according to (12), wherein the first marker is a first color, the second marker is a second color different from the first color, and the third marker is a third color different from the first and second colors.

(14) A second aspect of the present invention is an information displaying method used on a computer connected to a first measuring unit for measuring a clinical sample and a second measuring unit for measuring a clinical sample so as to perform information communication with the first and second measuring units, the first measuring unit is provided with a first marker, by which the first measuring unit can be visually recognized, and the second measuring unit is provided with a second marker, which is different from the first marker and by which the second measuring unit can be visually recognized, the method comprising: displaying on a display of the computer the first marker in association with the information relating to the first measuring unit when displaying the information relating to the first measuring unit; and displaying on the display the second marker in association with the information relating to the second measuring unit when displaying the information relating to the second measuring unit.

(15) The information displaying method according to (14), wherein the first marker is a first color, and the second marker is a second color different from the first color.

### BRIEF DESCRIPTION OF THE DRAWINGS

Fig. 1 is a front view showing the schematic configuration of a clinical sample analysis apparatus according to an embodiment.
Fig. 2 is a block diagram showing the configuration of a measuring unit of the clinical sample analysis apparatus according to the embodiment.
Fig. 3 is a schematic configuration diagram of a WBC detection section according to the embodiment.
Fig. 4 is a block diagram showing the configuration of an information processing unit of the clinical sample analysis apparatus according to the embodiment.
Fig. 5 is a diagram showing an example of the data configuration of a device information storage section according to the embodiment.
Fig. 6 shows flowcharts showing the processing procedures of the measuring units and the information processing unit according to the embodiment.
Fig. 7 shows flowcharts showing the processing procedures of the measuring units and the information processing unit according to the embodiment.
Fig. 8 shows flowcharts showing the processing procedures of the measuring units and the information processing unit according to the embodiment.
Fig. 9 shows flowcharts showing the processing procedures of the measuring units and the information processing unit according to the embodiment.
Fig. 10 is a flowchart showing the procedure of a color change process of the information processing unit according to the embodiment.
Fig. 11 is a diagram showing an initial screen which is displayed on a display section of the information processing unit according to the embodiment.
Fig. 12A is a diagram showing a menu screen which is displayed on the display section of the information processing unit according to the embodiment.
Fig. 12B is a diagram showing a menu screen which is displayed on the display section of the information processing unit according to the embodiment.
Fig. 12C is a diagram showing a menu screen which is displayed on the display section of the information processing unit according to the embodiment.
Fig. 13 is a diagram showing a measurement section setting screen which is displayed on the display section of the information processing unit according to the embodiment.
Fig. 14A is a diagram showing a measurement section help window which is displayed on the display section of the information processing unit according to the embodiment.
Fig. 14B is a diagram showing a measurement section help window which is displayed on the display section of the information processing unit according to the embodiment.
Fig. 14C is a diagram showing a measurement section help window which is displayed on the display section of the information processing unit according to the embodiment.
Fig. 15A is a diagram showing a measurement item registration screen which is displayed on the display section of the information processing unit according to the embodiment.
Fig. 15B is a diagram showing a measurement item registration screen which is displayed on the display section of the information processing unit according to the embodiment.
Fig. 15C is a diagram showing a measurement item registration screen which is displayed on the display section of the information processing unit according to the embodiment.
Fig. 16A is a diagram showing an analysis result screen which is displayed on the display section of the information processing unit according to the embodiment.
Fig. 16B is a diagram showing an analysis result screen which is displayed on the display section of the information processing unit according to the embodiment.
Fig. 16C is a diagram showing an analysis result screen which is displayed on the display section of the information processing unit according to the embodiment.
Fig. 17 is a diagram showing a state screen which is displayed on the display section of the information processing unit according to the embodiment.
Fig. 18 is a diagram showing an example of the screen configuration which is displayed on the display section of the information processing unit according to the embodiment.
Fig. 19 is a diagram showing an example of the screen configuration which is displayed on the display section of the information processing unit according to the embodiment.
Fig. 20 is a diagram showing an example of the screen configuration which is displayed on the display section of the information processing unit according to the embodiment.

### DETAILED DESCRIPTION OF THE PREFERRED EMBODIMENTS

Hereinafter, preferred embodiments of the present invention will be described with reference to the drawings.

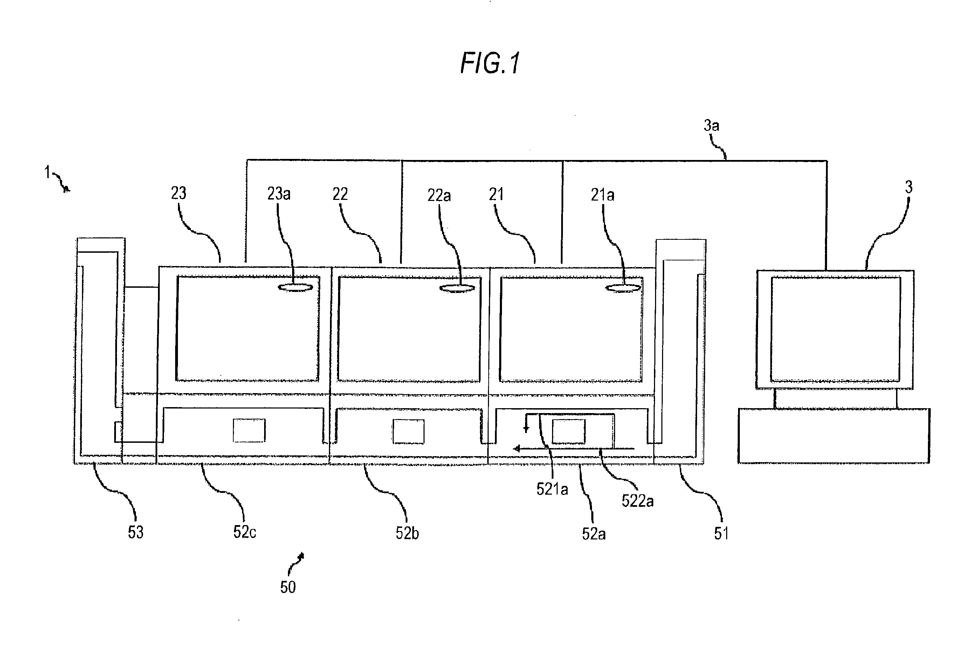

Fig. 1 is a front view showing the schematic configuration of a clinical sample analysis apparatus 1 according to an embodiment of the present invention.

As shown in Fig. 1, the clinical sample analysis apparatus 1 of this embodiment includes measuring units 21, 22 and 23 which are blood cell counting devices, an information processing unit 3 and a sample transport device 50. For example, the measuring unit 21 measures blood and obtains measurement data for calculating the number of white blood cells (WBC), red blood cells (RBC) and platelets (PLT) and the like. The information processing unit 3 has a function of obtaining the analysis result by processing the measurement data output from the measuring units 21, 22 and 23. The sample transport device 50 automatically supplies samples to the measuring units 21, 22 and 23 by an instruction from the information processing unit 3. The information processing unit 3 has a personal computer and is connected to the measuring units 21, 22 and 23 via a communication cable 3a so as to communicate therewith. The sample transport device 50 includes a sample input unit 51 which stores sample racks in which measurement has not yet been performed, transport units 52a, 52b and 52c for transporting sample racks containing samples to the measuring units 21, 22 and 23, and a sample storage unit 53 for storing sample racks in which measurement has been performed. The transport unit 52a includes a transport passage 521a for transporting samples, which are to be measured, to the measuring unit 21, and a transport passage 522a for transporting samples, which are not to be measured by the measuring unit 21, to the transport unit 52b or 52c or the sample storage unit 53. Each of the transport units 52b and 52c has the same configuration as that of the transport unit 52a.

In upper right portions of the front faces of the measuring units 21, 22 and 23, light-emitting sections 21a, 22a and 23a are provided for identifying each of the measuring units by color. The respective light-emitting sections 21a, 22a and 23a have a three-color LED. The three-color LED is embedded with a red-color LED chip (R), a green-color LED chip (G) and a blue-color LED chip (B) in one package. As the three-color LED, for example, the trade name "full color LED (type name: NSTM515)", manufactured by Nichia CORPORATION, can be used.

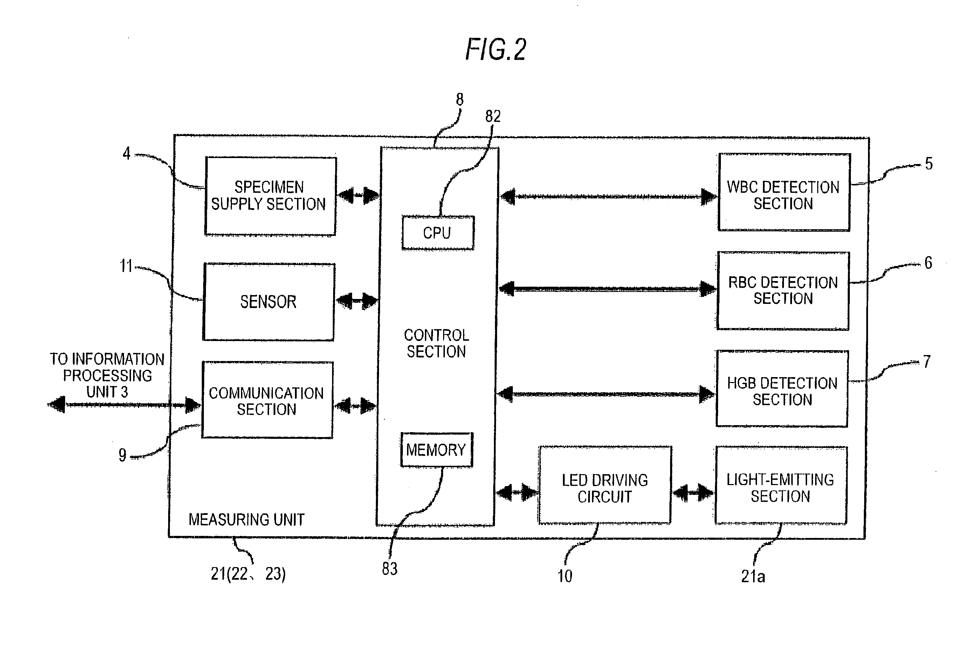

Fig. 2 is a block diagram showing the configuration of the measuring unit 21. The measuring unit 21 includes a specimen supply section 4, a WBC detection section 5, a RBC detection section 6, a HGB detection section 7, a control section 8, a communication section 9, an LED driving circuit 10, the light-emitting section 21a and a sensor 11. In this embodiment, each of the measuring units 22 and 23 has the same configuration as that of the measuring unit 21, except that the light-emitting sections 22a and 23a emit light in colors different from that of the light-emitting section 21a. Accordingly, when describing the measuring units 22 and 23 below, the same configurations as those of the measuring unit 21 will be described by using the same reference numbers as those of the measuring unit 21.

The control section 8 includes a CPU 82 and a memory 83 having a ROM and a RAM and controls operations of the various constituent elements of the measuring unit 21. In addition, the memory 83 of the measuring unit 21 stores device information including a device ID 11001 of the measuring unit 21. The memory 83 of the measuring unit 22 stores device information of the measuring unit 22 including a device ID 11002 and the memory 83 of the measuring unit 23 stores device information of the measuring unit 23 including a device ID 11003. Further, the memory 83 stores error IDs which are information for specifying errors.

The LED driving circuit 10 is a circuit for causing the light-emitting section 21a to emit light in a predetermined color by controlling voltages which are supplied to the LED chips of three colors of the light-emitting section 21a. The light-emitting section 21a can display colors which indicate color information stored in the memory 83 by the LED driving circuit 10.

The communication section 9 is, for example, a RS-232C interface, a USB interface or an Ethernet (registered name) interface, and can transmit and receive data to and from the information processing unit 3.

The sensor 11 indicates a plurality of sensors which are provided in the various constituent elements of the measuring unit 21 in order to monitor operation circumstances of the measuring unit 21. For example, in the specimen supply section 4, a sensor for detecting whether or not a pipette is positioned at an initial position and a sensor for detecting whether or not a pipette is positioned at a measurement specimen aspiration position are provided. On the basis of the output of these sensors, the CPU 82 monitors whether or not a pipette has moved to the measurement specimen aspiration position from the initial position within a predetermined length of time.

The specimen supply section 4 includes a pipette for aspirating a sample from a sample container, a mixing container for mixing a sample with a reagent, a pump for supplying a sample and a reagent to the mixing container and the like. The specimen supply section 4 aspirates blood, prepares specimens from the aspirated blood which are to be provided for the measurement of red blood cells, the measurement of platelets and the measurement of hemoglobin, and supplies the prepared specimens to the RBC detection section 6 and the HGB detection section 7. In addition, the specimen supply section 4 mixes the aspirated blood and a reagent (hemolyzing agent, stain solution), prepares specimens which are to be provided for the measurement of white blood cells, and supplies the prepared specimens to the WBC detection section 5.

The WBC detection section 5 is an optical detection section capable of performing WBC measurement (measurement of the number of white blood cells) and DIFF measurement (white blood cell classification). The WBC detection section 5 can perform WBC measurement and DIFF measurement by a flow cytometry method using a semiconductor laser. The configuration of the WBC detection section 5 will be described later in detail. WBC measurement is a measurement operation for counting the number of white blood cells and calculating the concentration of white blood cells in a specimen. DIFF measurement is a measurement operation for classifying white blood cells into lymphocytes, basophils, eosinophils, neutrophils, monocytes and the like and calculating the concentration of each in specimens.

The RBC detection section 6 is a RBC/PLT detection section for performing RBC measurement (measurement of the number of red blood cells) and PLT measurement (measurement of the number of platelets) . This RBC detection section 6 can perform RBC and PLT measurement by a sheath flow DC detection method.

The HGB detection section 7 is a HGB detection section for performing HGB measurement (measurement of hemoglobin content in blood). This HGB detection section 7 can perform HGB measurement by a SLS-hemoglobin method.

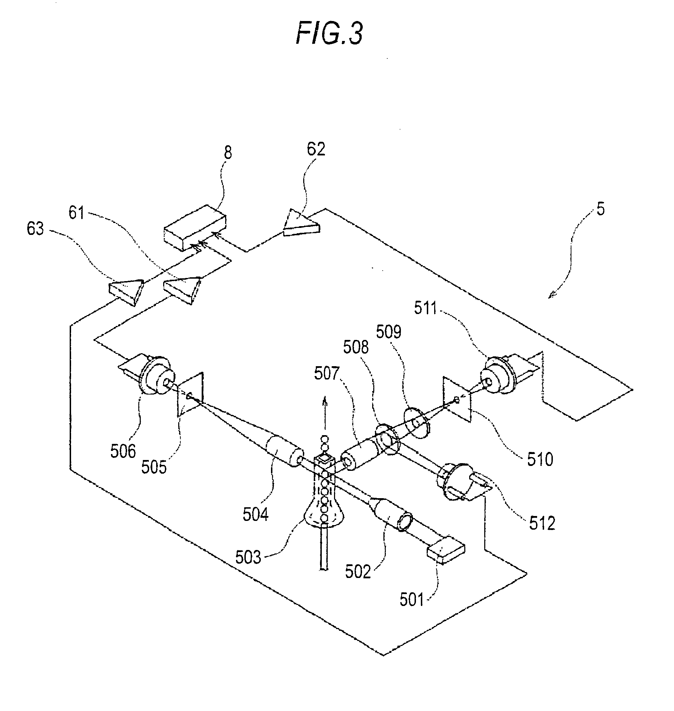

Fig. 3 is a perspective view showing the configuration of the WBC detection section 5. As shown in Fig. 3, the WBC detection section 5 includes a laser diode 501, a collimator lens 502, a sheath flow cell 503, a condenser lens 504, a pinhole plate 505, a photo diode 506, a condenser lens 507, a dichroic mirror 508, a photo multiplier tube (hereinafter, referred to as PMT) 512, a filter 509, a pinhole plate 510, a photo multiplier tube (hereinafter, referred to as PMT) 511 and amplifiers 61 to 63.

The measurement specimen supplied from the specimen supply section 4 (see Fig. 2) flows through the sheath flow cell 503 . The measurement specimen flowing through the sheath flow cell 503 is irradiated with the light emitted from the laser diode 501 via the collimator lens 502. The light (forward-scattered light) scattered forward by the measurement specimen flowing through the sheath flow cell 503 enters the photo diode 506 via the condenser lens 504 and the pinhole plate 505. The light (side-scattered light) scattered laterally by the measurement specimen flowing through the sheath flow cell 503 enters the PMT 512 via the condenser lens 507 and the dichroic mirror 508.

By the irradiation of the light, the fluorescence emitted from the measurement specimen flowing through the sheath flow cell 503 enters the PMT 511 via the condenser lens 507, the dichroic mirror 508, the filter 509 and the pinhole plate 510. The photo diode 506 converts the incident forward-scattered light into electric information according to the strength thereof and outputs the information as the strength of the forward-scattered light. The PMT 512 converts the incident side-scattered light into electric information according to the strength thereof and outputs the information as the strength of the side-scattered light. The PMT 511 converts the incident fluorescence into electric information according to the strength thereof and outputs the information as the strength of the fluorescence. The strength of the forward-scattered light output from the photo diode 506, the strength of the fluorescence output from the PMT 511 and the strength of the side-scattered light output from the PMT 512 are amplified by the amplifiers 61, 62 and 63, respectively, and input to the control section 8.

Basically, each of the measuring units 22 and 23 has the same configuration as that of the measuring unit 21, and thus the description of the configuration of the measuring units 22 and 23, which is the same as the configuration of the measuring unit 21, will be omitted.

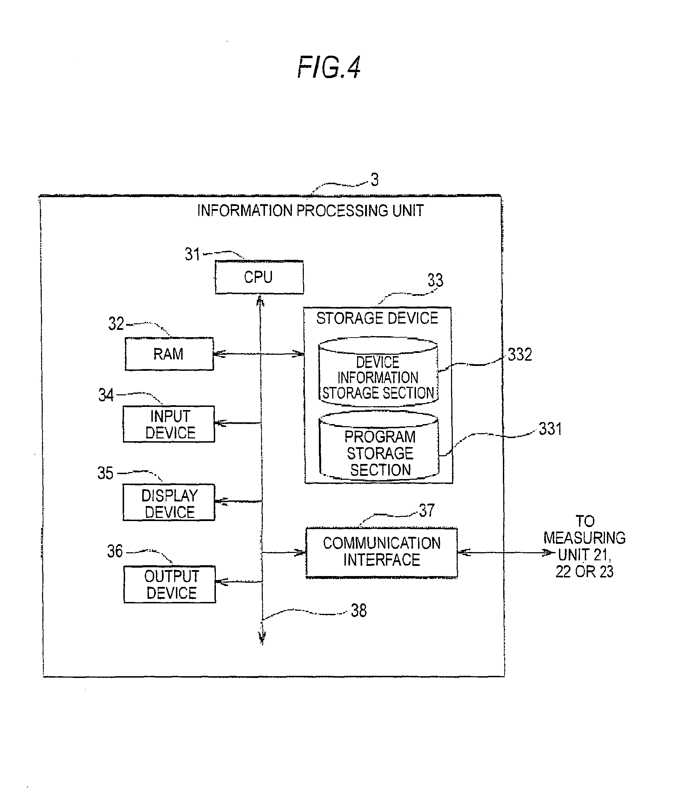

Fig. 4 is a block diagram showing the configuration of the information processing unit 3 of the clinical sample analysis apparatus 1 according to the embodiment of the present invention. As shown in Fig. 4, the information processing unit 3 includes a central processing unit (CPU) 31, a RAM 32, a storage device 33, an input device 34, a display device 35, an output device 36, a communication interface 37 and an internal bus 38 for connecting the above-described hardware to each other. The CPU 31 is connected to the above-described hardware of the information processing unit 3 via the internal bus 38 and controls operations of the above-described hardware. In addition, the CPU 31 executes various software functions in accordance with computer programs stored in a program storage section 331 of the storage device 33. The RAM 32 has a volatile memory such as a SRAM or a SDRAM. A load module is developed during the executing of a computer program, and temporary data and the like generated during the executing of the computer program are stored in the RAM 32.

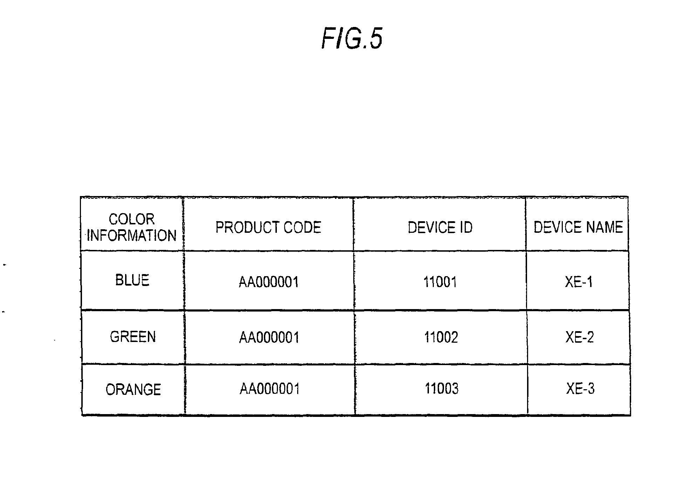

The storage device 33 has an embedded fixed storage device (hard disk) . The storage device 33 includes the program storage section 331 and a device information storage section 332. In the program storage section 331, various computer programs for execution in the CPU 31, such as operating systems and application programs, and data for use in execution of the computer programs are installed. For example, application programs for registering measurement items and application programs for obtaining or displaying information on errors of the measuring units 21, 22 and 23 are installed in the program storage section 331. In addition, in the device information storage section 332, the device information of the measuring units 21, 22 and 23 is stored. Fig. 5 is a diagram showing an example of the data configuration of the device information storage section 332. As shown in Fig. 5, as device information corresponding to the measuring unit 21, device ID: 11001, product code: AA000001, device name: XE-1 and color information: blue are stored. As device information corresponding to the measuring unit 22, device ID: 11002, product code: AA000001, device name: XE-2 and color information: green are stored. As device information corresponding to the measuring unit 23, device ID: 11003, product code: AA000001, device name: XE-3 and color information: orange are stored.

In addition, in the storage device 33, information on aspects (error names, places at which errors occur, error recovery methods and the like) of various errors which can occur in the devices is stored in advance.

The communication interface 37 is connected to the internal bus 38 and is connected to the measuring units 21, 22 and 23 via the communication cable 3a to transmit and receive data. That is, the communication interface 37 transmits instruction information and the like indicting the start of the measurement to the measuring units 21, 22 and 23 and receives measurement data and the like.

The input device 34 is a data input medium such as a keyboard and a mouse. The display device 35 is a display device such as a CRT monitor or a LCD and displays the analysis result on the screen. The output device 36 is a printing device such as a laser printer or an inkjet printer.

The information processing unit 3 executes a computer program of the program storage section 331 by the CPU 31 to process the measurement data received from the measuring units 21, 22 and 23 and calculate the number of white blood cells (WBC), the number of red blood cells (RBC), hemoglobin (HGB) content, hematocrit (HCT), average red blood cell volume (MCV), average red blood cell hemoglobin content (MCH), mean corpuscular hemoglobin concentration (MCHC), the number of platelets (PLT) and the like.

Hereinafter, operations of the clinical sample analysis apparatus 1 according to this embodiment will be described. In the drawings, for the sake of convenience, the blue color is expressed by the downward diagonal stroke from top left to bottom right, the green color is expressed by the upward diagonal stroke from bottom left to top right, and the orange color is expressed by the vertical line.

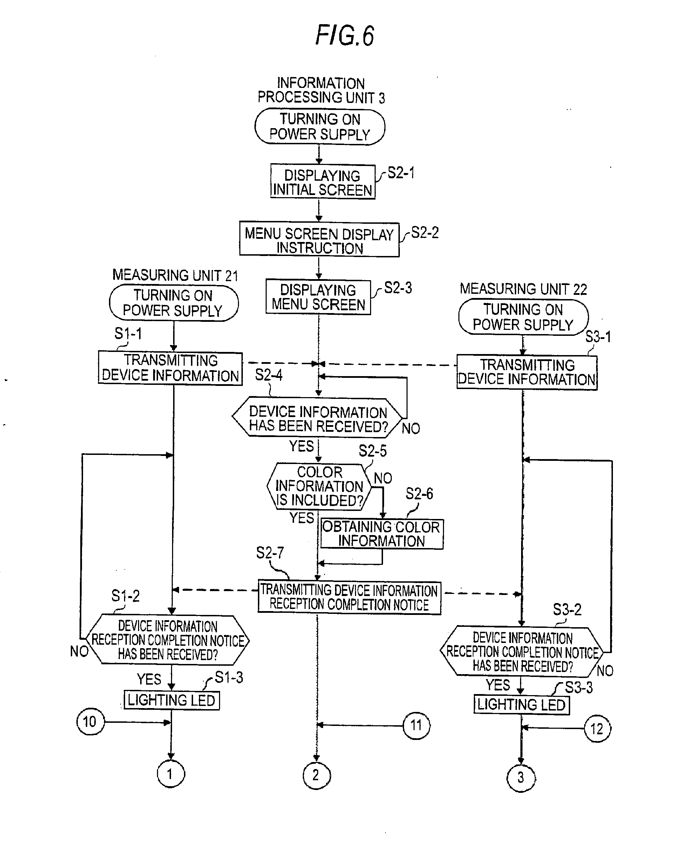

Figs. 6, 7, 8 and 9 are flowcharts showing the processing procedures of the CPU 82 of the measuring unit 21, the CPU 82 of the measuring unit 22 and the CPU 31 of the information processing unit 3 according to this embodiment. Hereinafter, processes of the CPU 82 of the measuring unit 21 and the CPU 31 of the information processing unit 3 will be described.

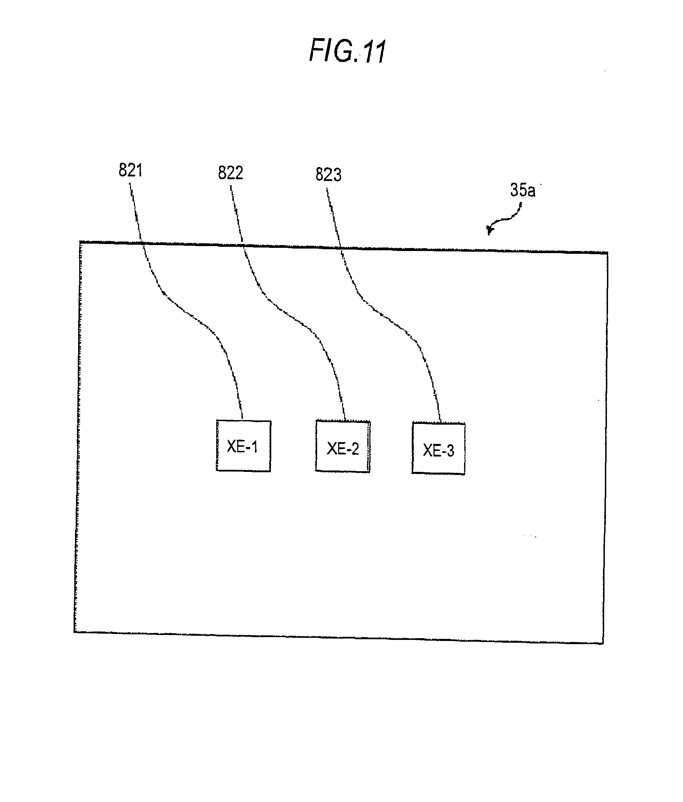

First, when a power supply of the information processing unit 3 is turned on by the operation of a user, the CPU 31 displays an initial screen 35a shown in Fig. 11 on the display device 35 of the information processing unit 3 (S2-1). As shown in Fig. 11, in the initial screen 35a, an icon 821 for displaying a menu screen 211a of the measuring unit 21, an icon 822 for displaying a menu screen 211b of the measuring unit 22 and an icon 823 for displaying a menu screen 211c of the measuring unit 23 are provided.

Next, when the icon 821, 822 or 823 is clicked by the operation of the user, the CPU 31 receives a display instruction of the menu screen corresponding to the clicked icon (S2-2). The CPU 31 retrieves device information of the measuring unit corresponding to the clicked icon from the device information storage section 332, and displays the menu screen 211a, 211b or 211c colorized with a color corresponding to the color information included in the corresponding device information (S2-3) .

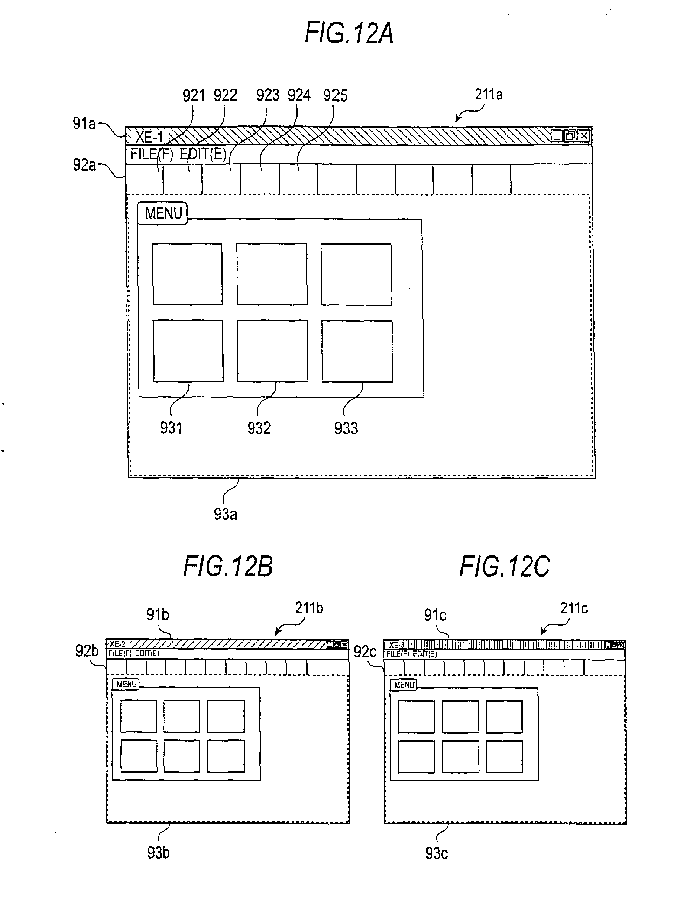

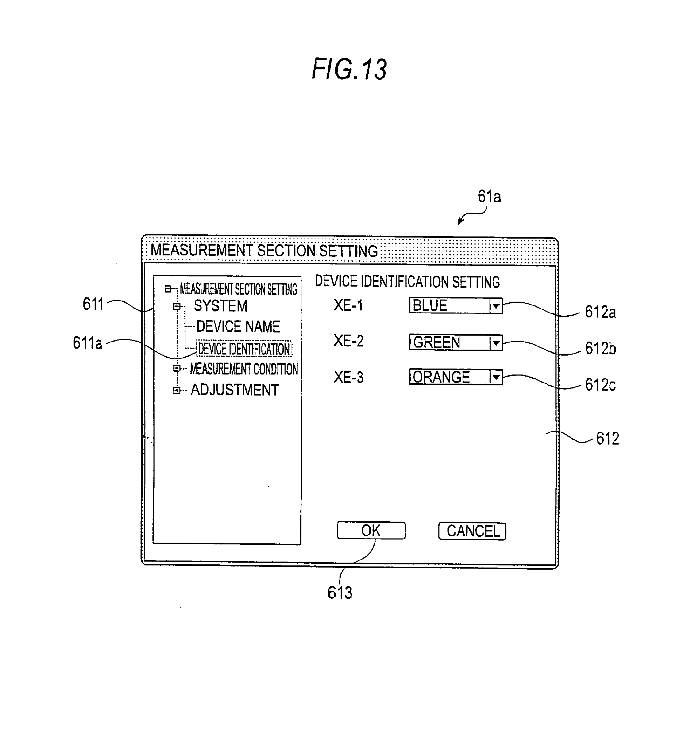

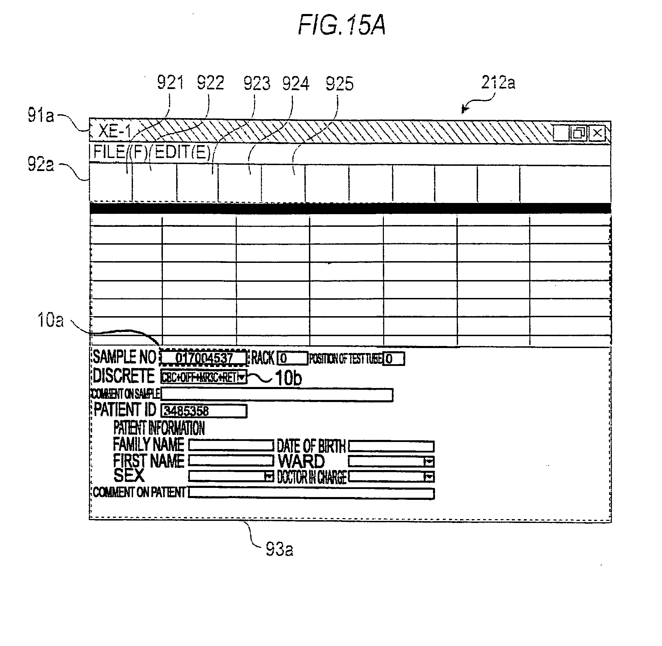

Fig. 12A is a diagram showing an example of the menu screen 211a of the measuring unit 21. As shown in Fig. 12A, in the menu screen 211a, a title bar 91a, a tool bar 92a, a function display area 93a and the like are provided. The title bar 91a is displayed with a color corresponding to the color information obtained from the device information storage section 332 and a device name is displayed at the left end of the title bar 91a. In greater detail, the title bar 91a is displayed with the blue color, and XE-1, which is a device name, is displayed at the left end of the title bar 91a. In addition, in the tool bar 92a, a registration button 921, a measurement start button 922, an analysis result button 923, a menu button 924, a state screen button 925 and the like are provided. In the function display area 93a, a measurement registration icon 931 for displaying a measurement item registration screen 212a shown in Fig. 15A, a shutdown icon 932, a setting icon 933 for displaying a measurement section setting screen 61a shown in Fig. 13 and the like are provided.

Fig. 12B is a diagram showing an example of the menu screen 211b of the measuring unit 22, and Fig. 12C is a diagram showing an example of the menu screen 211c of the measuring unit 23. Since the basic configuration of the menu screens 211b and 211c is the same as that of the menu screen 211a, a description thereof will be omitted. However, unlike the menu screen 211a, a title bar 91b of the menu screen 211b is displayed with the green color, and XE-2, which is a device name, is displayed at the left end of the title bar 91b. A title bar 91c of the menu screen 211c is displayed with the orange color, and XE-3, which is a device name, is displayed at the left end of the title bar 91c.

When a power supply of the measuring unit 21 is turned on by the operation of the user, the CPU 82 of the measuring unit 21 transmits the device ID: 11001 which is stored in the memory 83 of the measuring unit 21, reagent information which is installed in the measuring unit 21 and the like as device information to the information processing unit 3 via the communication section 9 (S1-1).

When the memory 83 stores color information indicating the color of the light emitted by the light-emitting section 21a, the CPU 82 also transmits the color information as device information to the information processing unit 3.

The CPU 31 of the information processing unit 3 determines whether or not the device information has been received via the communication interface 37 (S2-4). When the device information has been received, it is determined whether or not color information is included in the received device information (S2-5).

When the color information is included in the device information, the CPU 31 transmits a device information reception completion notice to the measuring unit 21 (S2-7). When the color information is not included in the device information, the CPU 31 performs a retrieval operation within the device information storage section 332 on the basis of the received device information to obtain the color information which is blue corresponding to the measuring unit 21 (S2-6), and transmits a device information reception completion notice with the obtained color information to the measuring unit 21 via the communication interface 37 (S2-7).

The CPU 82 of the measuring unit 21 determines whether or not the device information reception completion notice has been received via the communication section 9 (S1-2). When the device information reception completion notice is received, the CPU 82 causes the light-emitting section 21a to emit light (S1-3) . When color information is not included in the device information reception completion notice received in Step 1-2, the CPU 82 causes the light-emitting section 21a to emit light in a color indicated by the color information stored in the memory 83. in addition, when color information which is blue is included in the received device information reception completion notice, the CPU 82 stores the received color information as device information in the memory 83 and causes the light-emitting section 21a to emit light in blue by controlling the LED driving circuit 10.

The CPU 31 of the information processing unit 3 determines whether or not the measurement section setting screen 61a shown in Fig. 13 is displayed on the display device 35 (S2-8). When the measurement section setting screen 61a is displayed, the CPU 31 advances the process to Step 2-11, and when the measurement section setting screen 61a is not displayed, the CPU determines whether or not a display instruction of the measurement section setting screen 61a has been received (S2-9). When the display instruction of the measurement section setting screen 61a has not been received, the CPU 31 advances the process to Step 2-12, and when the display instruction has been received, the CPU displays the measurement section setting screen 61a (S2-10).

The display instruction of the measurement section setting screen 61a is issued by selecting the setting icon 933 in the menu screen 211a of Fig. 12. Also in the menu screens 211b and 211c, the display instruction of the measurement section setting screen 61a is issued in the same manner as in the menu screen 211a.

In the measurement section setting screen 61a shown in Fig. 13, a menu tree display area 611 including a device identification item 611a, a device identification setting menu 612 including color information switching buttons 612a, 612b and 612c and an OK button 613 are provided. In the measurement section setting screen 61a, the device identification setting menu 612 is displayed by selecting the device identification item 611a of the menu tree display area 611.

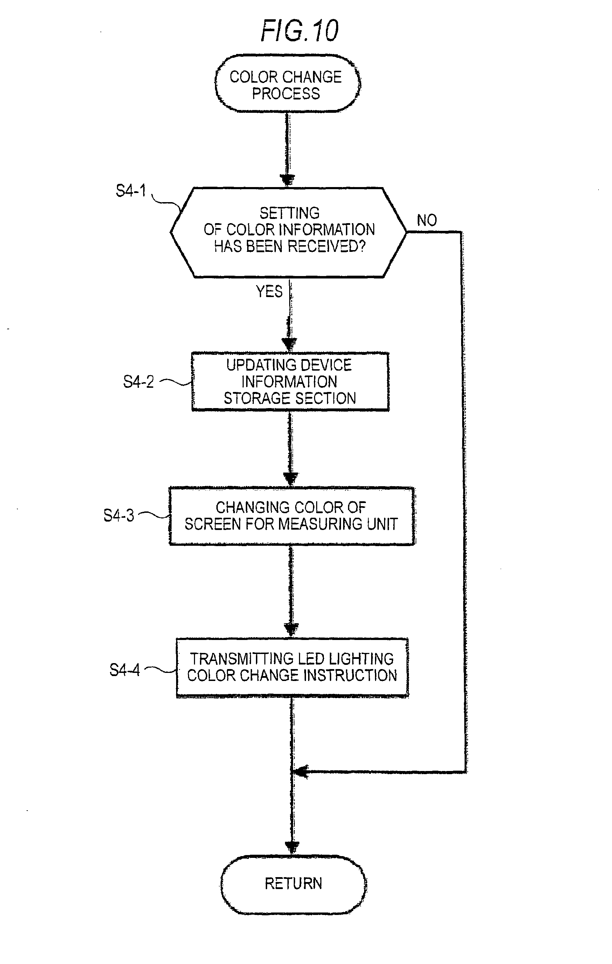

The color change process of Step S2-11 will be described by using Fig. 10. The CPU 31 determines whether or not the setting of color information has been received (S4-1), and when the setting of color information has been received, the CPU updates the color information stored in the device information storage section 332 (S4-2).

The setting of color information is performed in the following procedure. First, when the color information switching button 612a is clicked, a pull-down menu is displayed. Next, one color information is selected among the color information displayed in the pull-down menu, and the OK button 613 is clicked, whereby the setting of color information is completed. When changing color information of the measuring unit 22, the color information switching button 612b is used, and when changing color information of the measuring unit 23, the color information switching button 612c is used.

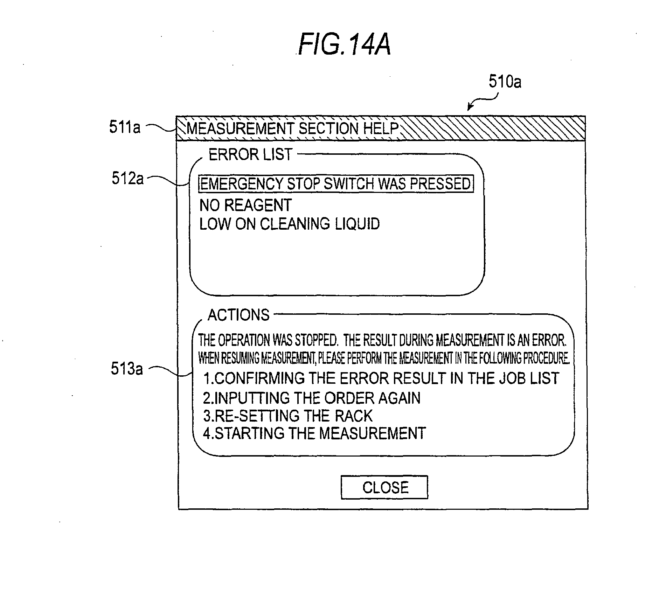

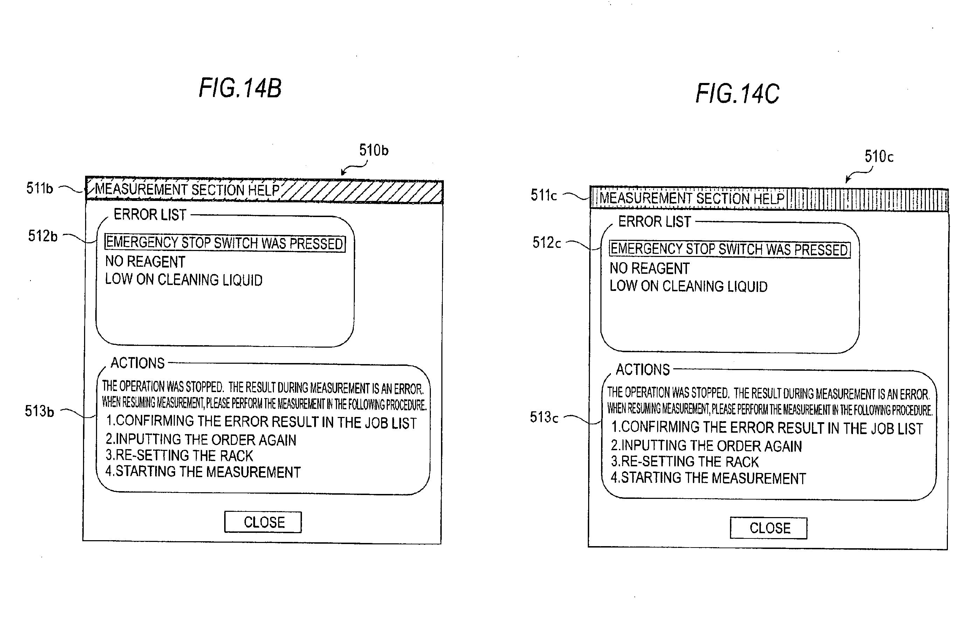

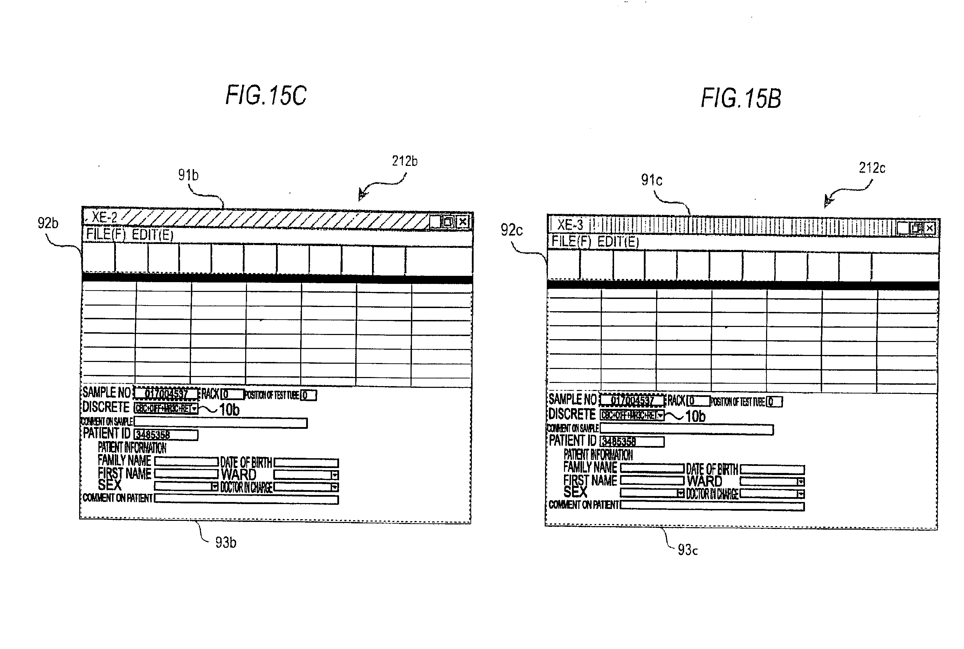

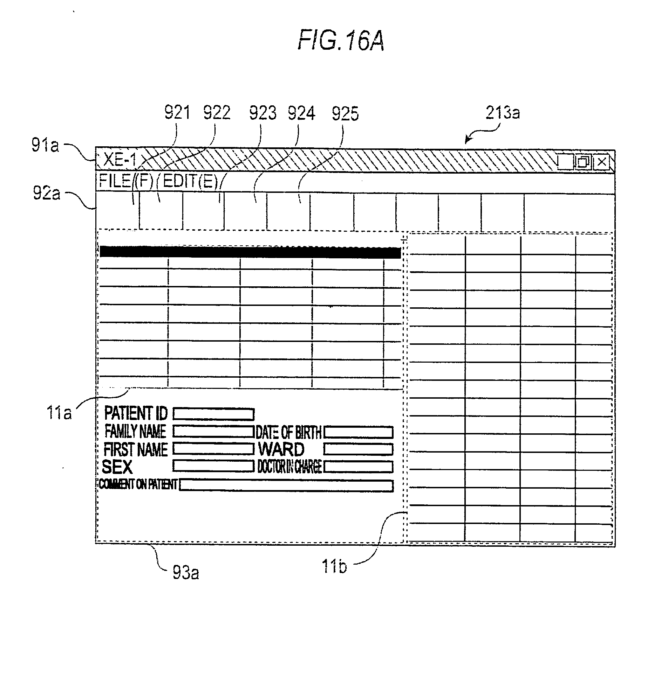

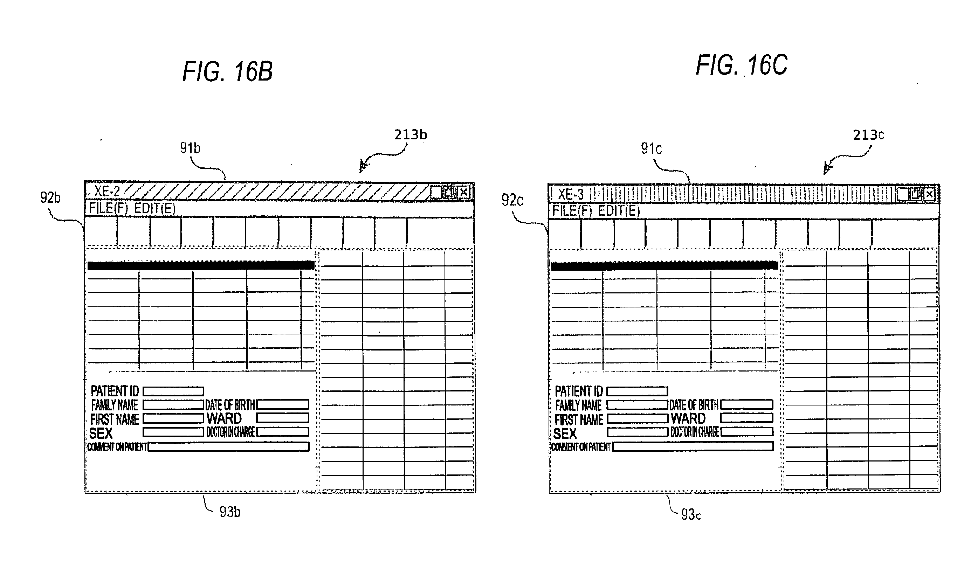

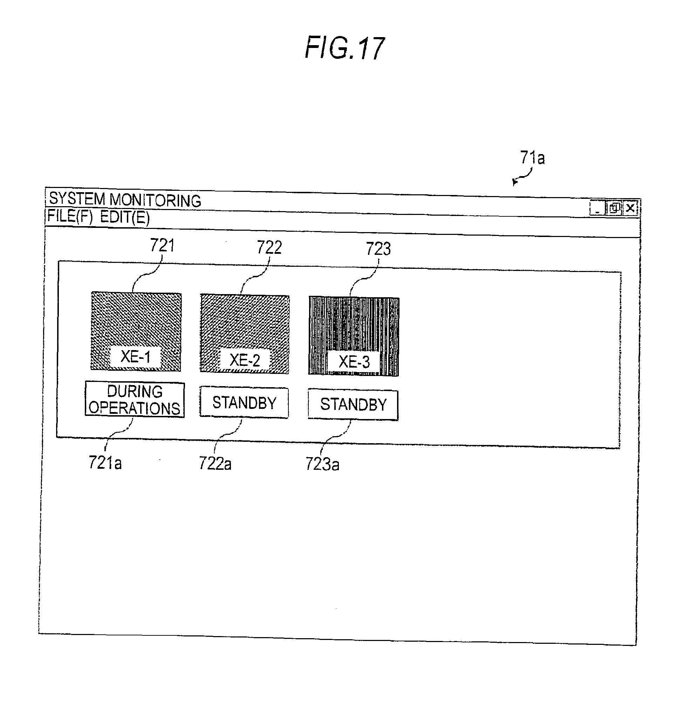

Next, the CPU 31 changes the colors which are displayed in the screens for the measuring units (S4-3). Here, "the screens for the measuring units" is a generic term including a state screen 71a shown in Fig. 17 and the screens displayed for each measuring unit. For example, when the color assigned for the measuring unit 21 is changed, the color displayed in the title bars 91a of the menu screen 211a shown in Fig. 12, measurement item registration screen 212a shown in Fig. 15 and analysis result screen 213a shown in Fig. 16, a title bar 511a of a measurement section help window 510a shown in Fig. 14 and an icon 721 of the state screen 71a shown in Fig. 17 is changed. Since the colors assigned for the measuring units 22 and 23 are changed in the same manner as in the case of the measuring unit 21, a description thereof will be omitted.

Next, the CPU 31 transmits an LED lighting color change instruction including the changed color information to the measuring unit 21 via the communication interface 37 (S4-4).

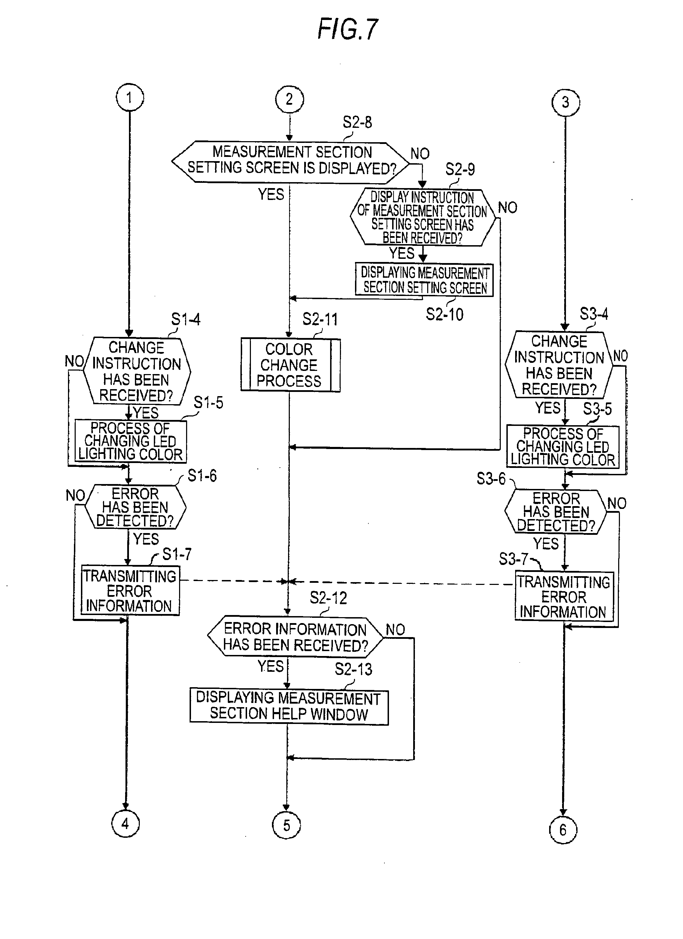

In Fig. 7, the CPU 82 determines whether or not the LED lighting color change instruction has been received (S1-4) . When the instruction has not been received, the CPU advances the process to Step 1-6, and when the instruction has been received, the CPU changes the color which is emitted by the light-emitting section 21a by controlling the LED driving circuit 10 on the basis of the received color information, and updates the color information of the device information stored in the memory 83 (S1-5).

The CPU 82 determines whether or not the sensor 11 has detected an error (S1-6). When no error has been detected, the CPU advances the process to Step 1-8, and when an error has been detected, the CPU reads a corresponding error ID from the memory 83 to generate error information including the device ID and the error ID, and transmits the error information to the information processing unit 3 via the communication section 9 (S1-7).

The CPU 31 of the information processing unit 3 determines whether or not the error information has been received (S2-12). When the error information has not been received, the CPU advances the process to Step 2-14, and when the error information has been received, the CPU displays the measurement section help window 510a shown in Fig. 14 so as to overlap on the screen which is displayed beforehand on the display device 35 (S2-13). At that time, the CPU 31 controls a speaker (not shown) so as to sound an alarm.

Fig. 14A is a diagram showing an example of the measurement section help window 510a of the measuring unit 21. In the measurement section help window 510a, the title bar 511a, an error list (error name display area) 512a, an action display area (recovery operation display area) 513a and the like are provided. The title bar 511a is displayed with the blue color on the basis of the color information obtained from the device information storage section 332. In the error list 512a, one or a plurality of detected error names are displayed. In Fig. 14A, three error names are displayed so as to be vertically arranged in the error list 512a. In this error list 512a, the error names are displayed in order of high priority. In the action display area 513a, an action message corresponding to an error selected in the error list 512a is displayed. Here, the action message mainly relates to an error recovery method and a procedure for recovering the error is shown as a document (text) .

In an initial state immediately after the popping-up of the measurement section help window 510a, the error name in the uppermost portion in the error list 512a is selected. An action message corresponding to the selected error name is displayed in the action display area 513a. When the user selects another error name, an action message corresponding to the error name is displayed in the action display area 513a.

Fig. 14B is a diagram showing a measurement section help window 510b of the measuring unit 22 and Fig. 14C is a diagram showing a measurement section help window 510c of the measuring unit 23. Since the basic configuration of the measurement section help windows 510b and 510c is the same as that of the measurement section help window 510a, a description thereof will be omitted. However, unlike the measurement section help window 510a, a title bar 511b of the measurement section help window 510b is displayed with the green color and a title bar 511c of the measurement section help window 510c is displayed with the orange color.

When a button 514a of the measurement section help window 510a is selected, the CPU 31 completes the process of displaying the measurement section help window, advances the process to Step 2-14, and determines whether or not the measurement item registration screen 212a shown in Fig. 15A is displayed on the display device 35 (S2-14).

Fig. 15A is a diagram showing an example of the measurement item registration screen 212a of the measuring unit 21. In the measurement item registration screen 212a, the title bar 91a, the tool bar 92a, the function display area 93a and the like are provided. The title bar 91a is displayed with the blue color on the basis of the color information obtained from the device information storage section 332 and XE-1, which is a device name, is displayed at the left area of the title bar 91a. In the tool bar 92a, the registration button 921, the measurement start button 922, the analysis result button 923, the menu button 924, the state screen button 925 and the like are provided. In the function display area 93a, a sample number input area 10a, a measurement item selection button 10b and the like are provided.

Fig. 15B is a diagram showing a measurement item registration screen 212b of the measuring unit 22 and Fig. 15C is a diagram showing a measurement item registration screen 212c of the measuring unit 23. Since the basic configuration of the measurement item registration screens 212b and 212c is the same as that of the measurement item registration screen 212a, a description thereof will be omitted. However, unlike the measurement item registration screen 212a, the title bar 91b of the measurement item registration screen 212b is displayed with the green color and XE-2, which is a device name, is displayed therein. The title bar 91c of the measurement item registration screen 212c is displayed with the orange color and XE-3, which is a device name, is displayed therein.

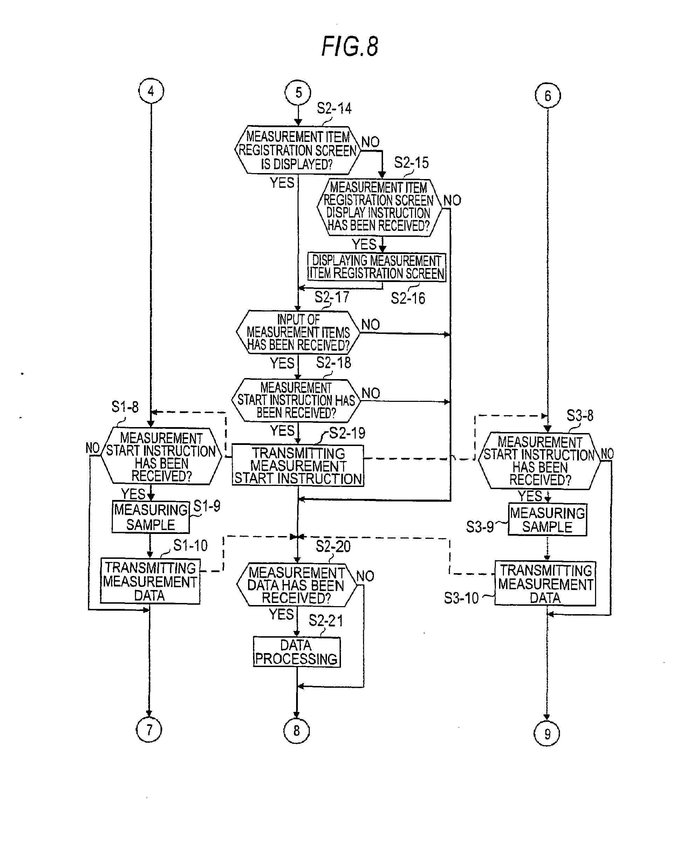

In Fig. 8, when the measurement item registration screen 212a is not displayed, the CPU 31 determines whether or not a measurement item registration screen display instruction has been received (S2-15) . When the measurement item registration screen display instruction has not been received, the CPU advances the process to Step 2-20, and when the measurement item registration screen display instruction has been received, the CPU displays the measurement item registration screen 212a shown in Fig. 15A (S2-16). The measurement item registration screen 212a is displayed in the function display area 93a of Fig. 12A by selecting the measurement registration icon 931 of the menu screen 211a with the user using a mouse.

The CPU 31 determines whether or not the input of measurement items has been received in the measurement item registration screen 212a (S2-17). When the input of measurement items has not been received, the CPU advances the process to Step 2-20, and when the input of measurement items has been received, the CPU determines whether or not a measurement start instruction has been received (S2-18).

When the measurement start instruction has not been received, the CPU 31 advances the process to Step 2-20, and when the measurement start instruction has been received, the CPU 31 transmits the measurement start instruction to the measuring unit 21 (S2-19) . The measurement start instruction is issued by selecting the measurement start button 922 provided in the tool bar 92a of the measurement item registration screen 212a.

The CPU 82 of the measuring unit 21 determines whether or not the measuring unit 21 has received the measurement start instruction (S1-8). When the measurement start instruction has not been received, the CPU advances the process to Step 1-11, and when the measurement start instruction has been received, the CPU 82 controls the specimen supply section 4, the WBC detection section 5, the RBC detection section 6 and the HGB detection section so as to measure the sample (S1-9).

In this embodiment, in Step 1-9, the following process is performed. First, the CPU 82 causes the specimen supply section 4 to prepare a measurement specimen for red blood cell and platelet measurement (hereinafter, referred to as "RBC/PLT measurement specimen"), a measurement specimen for white blood cell measurement (hereinafter, referred to as "WBC measurement specimen") and a measurement specimen for hemoglobin measurement (hereinafter, referred to as "HGB measurement specimen"). Next, the CPU 82 controls the WBC detection section 5, the RBC detection section 6 and the HGB detection section so as to measure the RBC/PLT measurement specimen, the WBC measurement specimen and the HGB measurement specimen, respectively.

Next, the CPU 82 transmits measurement data to the information processing unit 3 via the communication section 9 (S1-10). Here, the measurement data is measurement data which is obtained by measuring, for example, the WBC measurement specimen in the WBC detection section 5.

In Fig. 8, the CPU 31 of the information processing unit 3 determines whether or not the measurement data has been received (S2-20). When the measurement data has been received, the CPU 31 executes a classification and counting process of particles included in the measurement specimen on the basis of the measurement data received by the information processing unit 3 (S2-21).

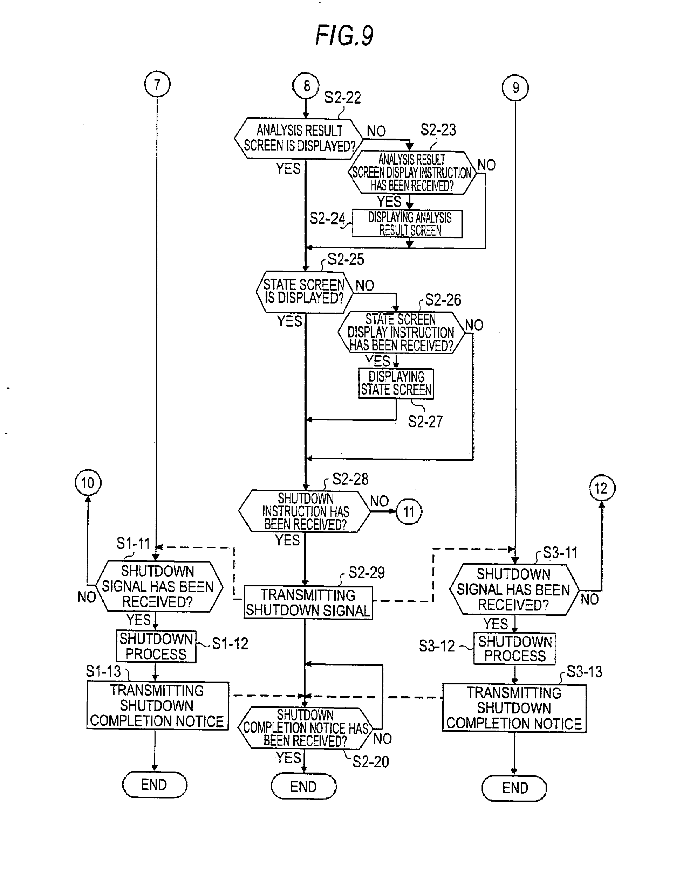

In Fig. 9, the CPU 31 determines whether or not the analysis result screen 213a shown in Fig. 16A is displayed on the display device 35 (S2-22). When the analysis result screen 213a is not displayed, the CPU determines whether or not a display instruction of the analysis result screen has been received (S2-23), and when the display instruction has been received, the CPU displays the analysis result screen 213a in the function display area 93a of Fig. 12A (S2-24).

Fig. 16A is a diagram showing an example of the analysis result screen 213a of the measuring unit 21. In the analysis result screen 213a, the title bar 91a, the tool bar 92a, the function display area 93a and the like are provided. The title bar 91a is displayed with the blue color on the basis of the color information obtained from the device information storage section 332 and XE-1, which is a device name, is displayed at the left area thereof. In the tool bar 92a, the registration button 921, the measurement start button 922, the analysis result button 923, the menu button 924, the state screen button 925 and the like are provided. In the function display area 93a, a sample information display area 11a for displaying a sample number and the like, a measurement result display area 11b for displaying numerical data of the measurement result and the like are provided.

Fig. 16B is a diagram showing an analysis result screen 213b of the measuring unit 22 and Fig. 16C is a diagram showing an analysis result screen 213c of the measuring unit 23. Since the basic configuration of the analysis result screens 213b and 213c is the same as that of the analysis result screen 213a, a description thereof will be omitted. However, unlike the analysis result screen 213a, the title bar 91b of the analysis result screen 213b is displayed with the green color and XE-2, which is a device name, is displayed therein. The title bar 91c of the analysis result screen 213c is displayed with the orange color and XE-3, which is a device name, is displayed therein.

The analysis result screen display instruction is issued by selecting the analysis result button 923 displayed in the tool bar 92a of the menu screen 211a or the measurement item registration screen 212a with the user using a mouse. The analysis result screen 213a is displayed in the function display area 93a of Fig. 12A.

The CPU 31 determines whether or not the state screen 71a shown in Fig. 17 is displayed on the display device 35 (S2-25). When the state screen 71a is not displayed, the CPU determines whether or not a state screen display instruction has been received (S2-26), and when the state screen display instruction has been received, the CPU displays the state screen 71a on the display device 35 (S2-27).

Fig. 17 is a diagram showing an example of the state screen 71a. As shown in Fig. 17, in the state screen 71a, the icon 721 showing the measuring unit 21 which is connected to the information processing unit 3, an icon 722 showing the measuring unit 22, an icon 723 showing the measuring unit 23, a state display area 721a for displaying a state of the measuring unit 21, a state display area 722a for displaying a state of the measuring unit 22 and a state display area 723a for displaying a state of the measuring unit 23 are provided. The icon 721 is displayed with the blue color on the basis of the color information obtained from the device information storage section 332, and XE-1, which is a device name, is displayed therein. Similarly, the icon 722 is displayed with the green color and XE-2, which is a device name, is displayed therein, and the icon 723 is displayed with the orange color and XE-3, which is a device name, is displayed therein.

The state screen display instruction is issued by selecting the state screen button 925 displayed in the tool bar 92a of the menu screen 211a, the measurement item registration screen 212a or the analysis result screen 213a with the user using a mouse.

In Fig. 9, the CPU 31 determines whether or not a shutdown instruction has been received (S2-28). When the shutdown instruction has not been received, the CPU returns the process to Step 2-8, and when the shutdown instruction has been received, the CPU 31 transmits a shutdown signal to the measuring unit 21 via the communication interface 37 (S2-29).

In this embodiment, the shutdown instruction is executed by selecting the shutdown icon 932 of the menu screen 211a. The display of the menu screen 211a is executed by selecting the menu buttons 924 of the tool bars 92a provided in the measurement item registration screen 212a and the analysis result screen 213a.

In Fig. 9, the CPU 82 of the measuring unit 21 determines whether or not the measuring unit 21 has received the shutdown signal (S1-11). When the shutdown signal has not been received, the CPU returns the process to Step 1-4, and when the shutdown signal has been received, the CPU 82 executes a shutdown process of the measuring unit 21 (S1-12).

When the shutdown process is completed, the CPU 82 transmits a shutdown completion notice to the information processing unit 3 via the communication section 9 (S1-13), and completes the process.

The CPU 31 of the information processing unit 3 determines whether or not the shutdown completion notice has been received (S2-30), and when the shutdown completion notice has been received, the CPU completes the process.

The processes of the CPU 31 of the information processing unit 3 and the CPU 82 of the measuring uni t 21 have been described as above on the basis of the flowcharts of Figs. 6 to 9. However, since the process (S3-1 to S3-13) of the CPU 82 of the measuring unit 22 is performed in the same manner as in the process of the CPU 82 of the measuring unit 21, a description thereof will be omitted. In addition, since the process of the CPU 82 of the measuring unit 23 is performed in the same manner as in the process of the CPU 82 of the measuring unit 21, flowcharts and a description of the process of the CPU 82 of the measuring unit 23 will be omitted.

In this embodiment, as described above, the light-emitting section 21a emits light in blue, and the title bars 91a and 511a are displayed with the blue color. The light-emitting section 22a emits light in green, and the title bars 91b and 511b are displayed with the green color. The light-emitting section 23a emits light in orange, and the title bars 91c and 511c are displayed with the orange color. Accordingly, the user can easily recognize the correspondence between the measuring unit and the information displayed in the screen which is displayed for each measuring unit by color. In this manner, when a portion displaying an indicator is made as a part of the screen, the area which displays information relating to the measuring unit other than the information which is the indicator can be widely maintained on the same screen.

Further, in this embodiment, the icon 721 of the state screen 71a of Fig. 17 is displayed with the same blue color as that of the light-emitting section 21a, the icon 722 is displayed with the same green color as that of the light-emitting section 22a, and the icon 723 is displayed with the same orange color as that of the light-emitting section 23a. Accordingly, the user can easily recognize the correspondence between the icon and the measuring unit by color.

In this embodiment, the information processing unit 3 has a configuration to change colors which are displayed in the light-emitting sections 21a, 22a and 23a of the measuring units 21, 22 and 23 in the measurement section setting screen 61a. Accordingly, the user can save time and effort for setting color information which is displayed for each individual measuring unit.

In this embodiment, the information processing unit 3 has a configuration to change colors of the title bars 91a, 91b and 91c and the title bars 511a, 511b and 511c in the measurement section setting screen 61a. Accordingly, the user can decide a color corresponding to the measuring unit and the screen which is displayed for each measuring unit, and thus can easily recognize the correspondence between the measuring unit and the information displayed on the screen which is displayed for each measuring unit. Similarly, the information processing unit 3 has a configuration to change colors which are displayed in the icons 721, 722 and 723. Accordingly, the user can decide a color corresponding to the measuring unit and the icon, and thus can easily recognize the correspondence between the measuring unit and the icon.

As in this embodiment, when an LED capable of displaying a plurality of colors is used in the light-emitting sections 21a, 22a and 23a, one LED is necessary. Accordingly, when an LED capable of displaying a plurality of colors is used in the light-emitting sections 21a, 22a and 23a, a space for providing the light-emitting sections 21a, 22a and 23a can be reduced compared to the case in which a plurality of LEDs capable of displaying only one color are used or a display is used in the light-emitting sections 21a, 22a and 23a.

The embodiment of the present invention can be variously and appropriately changed within the scope of the technical thought shown in the claims.

In the above-described embodiment, an example is shown in which a blood cell counting device is applied to the measuring units 21, 22 and 23. However, the present invention is not limited thereto and may be applied to another clinical sample analysis apparatus, such as a urine analysis apparatus, a blood coagulation measurement apparatus, an immunity analysis apparatus, a biochemical analysis apparatus or a genetic amplification measurement apparatus.

In the above-described embodiment, the light-emitting section is used as an indicator display section of each measuring unit. However, the present invention is not limited thereto and a configuration can also be made in which the measuring units 21, 22 and 23 have a display and a picture or a device name can be used as an indicator. When the measuring units 21, 22 and 23 have a display, not only a color or only a picture may be used as an indicator, but a combination of some information, such as a combination of color and text information or a combination of picture and text information, also may be used as an indicator. In addition, as an indicator display section of each measuring unit, housings of the measuring sections may be constituted by housings which each have different colors, and a device name or a picture indicating a device may be displayed in advance in each housing. Seals having different colors may be adhered to the housings. In these cases, when a service man installs the devices, the color, device name, picture and the like of each measuring unit may be registered as device information which is stored in the device information storage section 332 of the information processing unit 3.

In the above-described embodiment, the menu screen, the measurement registration screen, the analysis result screen and the measurement section help window are shown as screens for displaying information relating to the measuring unit. However, the present invention is not limited thereto and other screens for displaying information relating to the measuring unit, such as a patient registration screen for registering patient information, a doctor registration screen for registering names of doctors, a ward registration screen for registering names of wards and an accuracy management screen for displaying information for determining whether or not accuracy management is normally carried out, may be used.

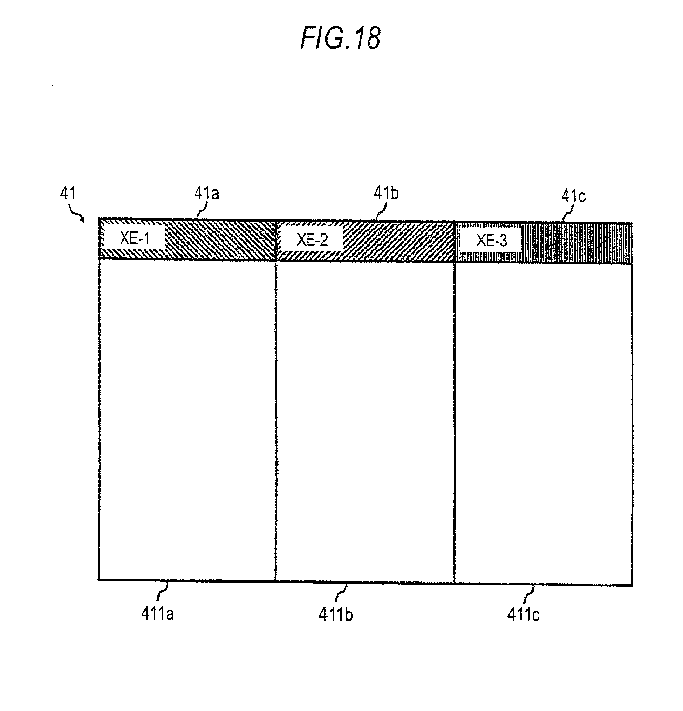

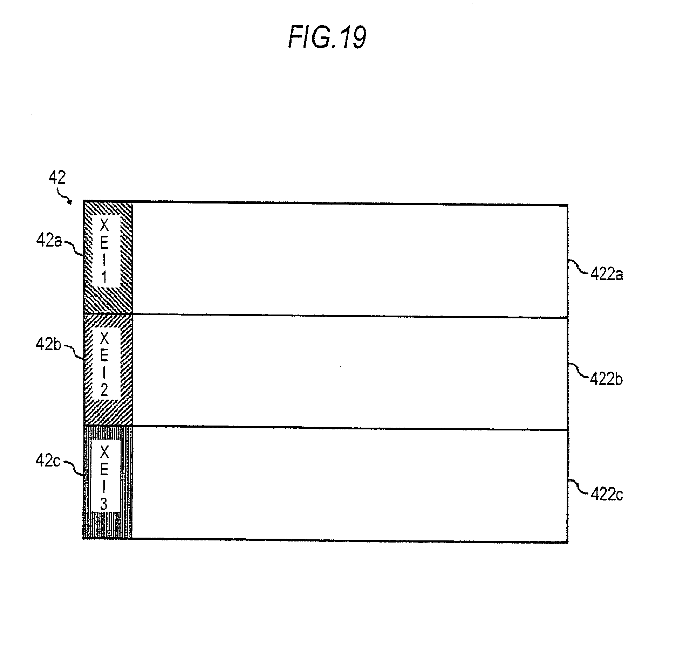

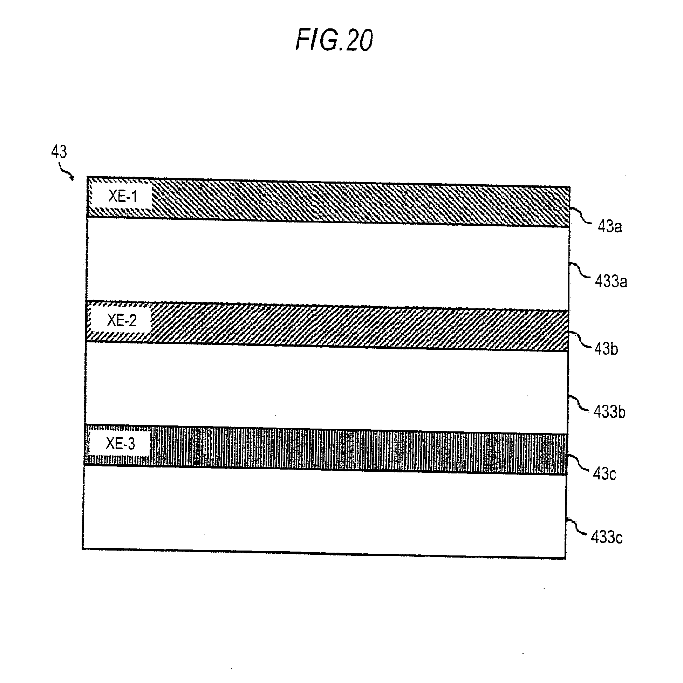

In the above-described embodiment, the screens shown in Figs. 12, 14, 15 and 16 are shown as the screens which are displayed for each measuring unit. However, the present invention is not limited thereto, and as shown in Figs. 18, 19 and 20, a screen may be used having a configuration in which the display area in one screen is divided into display areas for each measuring unit. For example, in a screen 41 shown in Fig. 18, an indicator display area 41a for displaying an indicator of the measuring unit 21, an indicator display area 41b for displaying an indicator of the measuring unit 22, an indicator display area 41c for displaying an indicator of the measuring unit 23, an information display area 411a for displaying information relating to the measuring unit 21, an information display area 411b for displaying information relating to the measuring unit 22, and an information display area 411c for displaying information relating to the measuring unit 23 are provided. The indicator display area 41a is displayed with the blue color on the basis of color information obtained from the device information storage section 332, and XE-1, which is a device name, is displayed at the left area thereof. In the information display area 411a, for example, information which is displayed in the function display areas 93a shown in Figs. 12, 15 and 16, information which is displayed in the error list 512a and the action display area 513a shown in Fig. 14 and the like are shown. As in the indicator display area 41a, the indicator display area 41b is displayed with the green color and XE-2, which is a device name, is displayed therein. In addition, the indicator display area 41c is displayed with the orange color and XE-3, which is a device name, is displayed therein.

Figs. 18, 19 and 20 show examples of the screen configuration. The reference numbers 42a and 43a correspond to the indicator display area 41a and the reference numbers 422a and 433a correspond to the information display area 411a. Similarly, the reference number 41b corresponds to the reference numbers 42b and 43b, the reference number 41c corresponds to the reference numbers 42c and 43c, the reference number 411b corresponds to the reference numbers 422b and 433b, and the reference number 411c corresponds to the reference numbers 422c and 433c.

In the above-described embodiment, the information processing unit 3 has a configuration to change colors which are emitted by the light-emitting sections 21a, 22a and 23a of the measuring units 21, 22 and 23. However, the present invention is not limited thereto, and a configuration can also be made in which the measuring units 21, 22 and 23 can change colors which are emitted by the light-emitting sections 21a, 22a and 23a and the information is transmitted to the information processing unit 3 to update the device information stored in the device information storage section 332.

In the above-described embodiment, colors as indicators are displayed in the title bars 91a, 91b and 91c and the title bars 511a, 511b and 511c. However, the present invention is not limited thereto. For example, a configuration can also be made in which colors as indicators are displayed in the tool bars 92a, 92b and 92c. Also, a configuration can also be made in which colors as indicators are displayed in the characters of the device names which are displayed in the title bars 91a, 91b and 91c or the like.

In the above-described embodiment, the light-emitting sections 21a, 22a and 23a are configured to have one LED capable of displaying a plurality of colors. However, the present invention is not limited thereto. For example, a configuration can also be made in which the light-emitting sections 21a, 22a and 23a have a plurality of LEDs capable of displaying only one color, such as a red-color LED, a green-color LED or a blue-color LED, and only an LED capable of displaying a color assigned for the measuring unit 21, 22 or 23 emits light. In addition, a configuration can also be made in which the light-emitting section has a white-color light source and a filter of plural colors and the color of the light-emitting section is changed by switching the filter.

## Claims

1. An analysis apparatus comprising:
a first measuring unit for measuring a clinical sample;
a second measuring unit for measuring a clinical sample;
and
an information processing unit which is connected to the first and second measuring units so as to perform information communication with the first and second measuring units,
wherein the first measuring unit is provided with a first marker by which the first measuring unit can be visually recognized,
the second measuring unit is provided with a second marker which is different from the first marker and by which the second measuring unit can be visually recognized, and
the information processing unit comprises:
an information display section for displaying information relating to the first measuring unit and information relating to the second measuring unit; and
a display controller for displaying the first marker on the information display section in association with the information relating to the first measuring unit when displaying the information relating to the first measuring unit on the information display section, and for displaying the second marker on the information display section in association with the information relating to the second measuring unit when displaying the information relating to the second measuring unit on the information display section.

2. The analysis apparatus according to Claim 1,
wherein the first measuring unit further comprises:
a first marker display section for displaying the first marker; and
a first controller for displaying the first marker on the first marker display section, and
the second measuring unit further comprises:
a second marker display section for displaying the second marker; and
a second controller for displaying the second marker on the second marker display section.

3. The analysis apparatus according to Claim 2,
wherein the information processing unit further comprises a setting section for setting the first and second markers,
the first controller displays the first marker which is set by the setting section on the first marker display section, and
the second controller displays the second marker which is set by the setting section on the second marker display section.

4. The analysis apparatus according to any one of claims 1 to 3,
wherein the information processing unit further comprises a setting section for setting the first and second markers, and
the display controller displays the first marker which is set by the setting section in association with the information relating to the first measuring unit on the information display section, and displays the second marker which is set by the setting section in association with the information relating to the second measuring unit on the information display section.

5. The analysis apparatus according to any one of claims 1 to 4,
wherein the first marker is a first color, and
the second marker is a second color different from the first color.

6. The analysis apparatus according to any one of claims 1 to 5,
wherein the information display section is configured to display a first display screen for displaying the information relating to the first measuring unit and a second display screen for displaying the information relating to the second measuring unit, and
the display controller displays the first marker together with the first display screen on the information display section when displaying the first display screen on the information display section, and displays the second marker together with the second display screen on the information display section when displaying the second display screen on the information display section.

7. The analysis apparatus according to Claim 6,
wherein the first marker is a first color,
the second marker is a second color different from the first color, and
the display controller displays a part of the first display screen with the first color when displaying the first display screen, and displays a part of the second display screen with the second color when displaying the second display screen.

8. The analysis apparatus according to Claim 6 or 7,
wherein the first display screen has a first display area for displaying the first marker and a second display area which is a larger area than the first display area, and
the second display screen has a third display area for displaying the second marker and a fourth display area which is a larger area than the third display area.

9. The analysis apparatus according to Claim 8,
wherein the first and third display areas are title bars or tool bars.

10. The analysis apparatus according to any one of claims 6 to 9,
wherein the display controller is configured to display the first display screen and the second display screen on the information display section at a time.

11. The analysis apparatus according to any one of claims 6 to 10,
wherein the first display screen is selected from a first menu screen for selecting an operation to be performed on the first measuring unit, a first error screen for displaying an error which occurred in the first measuring unit, a first measurement item registration screen for registering a measurement item to be measured by the first measuring unit and a first analysis result screen for displaying an analysis result based on measurement data obtained by the first measuring unit, and
the second display screen is selected from a second menu screen for selecting an operation to be performed on the second measuring unit, a second error screen for displaying an error which occurred in the second measuring unit, a second measurement item registration screen for registering a measurement item to be measured by the second measuring unit and a second analysis result screen for displaying an analysis result based on measurement data obtained by the second measuring unit.

12. The analysis apparatus according to any one of claims 1 to 11, further comprising:
a third measuring unit for measuring a clinical sample,
wherein the information processing unit is connected to the third measuring unit so as to perform information communication with the first and second measuring units,
the third measuring unit has a third marker which is different from the first and second markers and by which the third measuring unit can be visually recognized,
the information display section is configured to display information relating to the third measuring unit, and
the display controller displays the third marker in association with the information relating to the third measuring unit on the information display section when displaying the information relating to the third measuring unit on the information display section.

13. The analysis apparatus according to Claim 12,
wherein the first marker is a first color,
the second marker is a second color different from the first color, and
the third marker is a third color different from the first and second colors.

14. An information displaying method used on a computer connected to a first measuring unit for measuring a clinical sample and a second measuring unit for measuring a clinical sample so as to perform information communication with the first and second measuring units, the first measuring unit is provided with a first marker, by which the first measuring unit can be visually recognized, and the second measuring unit is provided with a second marker, which is different from the first marker and by which the second measuring unit can be visually recognized, the method comprising:
displaying on a display of the computer the first marker in association with the information relating to the first measuring unit when displaying the information relating to the first measuring unit; and
displaying on the display the second marker in association with the information relating to the second measuring unit when displaying the information relating to the second measuring unit.

15. The information displaying method according to Claim 14, wherein the first marker is a first color, and
the second marker is a second color different from the first color.
